# FASCICULE DE BREVET EUROPEEN

(11) **EP 0 860 112 B1**
(45) Date de publication et mention de la délivrance du brevet: **13.06.2001**
(21) Numéro de dépôt: 98420029.5
(22) Date de dépôt: 16.02.1998
(51) Int. Cl.: A01K 89/01

(54) **Moulinet étanche**
Wasserdichte Angelrolle
Watertight fishing reel

(30) Priorité: 17.02.1997 FR 9702135
(43) Date de publication de la demande: 26.08.1998
(73) Titulaire: Mitchell Sports, 74970 Marignier (FR)
(72) Inventeur: Bernard, Jean, 74950 Scionzier (FR); Plestan, Alain, 74970 Marignier (FR)
(74) Mandataire: Poncet, Jean-François

(56) Documents cités:
- FR-A- 2 701 812
- US-A- 4 813 629
- US-A- 4 852 826
- US-A- 4 911 378
- US-A- 5 156 351
- US-A- 5 203 104
- US-A- 5 328 127

## Description

La présente invention concerne les moulinets de pêche à bobine axiale fixe et récupérateur rotatif de fil.

Dans de tels moulinets de pêche connus, un boîtier à paroi rigide entoure une cavité dans laquelle est logé un mécanisme intérieur de transmission. La paroi du boîtier se raccorde, par une zone supérieure de liaison, à un pied de fixation sur une canne à pêche. Le boîtier comporte deux trous latéraux opposés pour le passage de l'arbre d'une manivelle de commande du mécanisme intérieur de transmission. Le boîtier comporte en outre un trou frontal de passage d'un arbre longitudinal creux portant un tambour récupérateur de fil. L'arbre longitudinal creux portant le tambour récupérateur de fil est engagé à rotation et est porté dans le trou frontal du boîtier en étant sollicité en rotation axiale par le mécanisme intérieur de transmission. Une bobine formant la réserve de fil de pêche est portée en bout d'un arbre support de bobine traversant l'arbre longitudinal creux. L'arbre support de bobine est sollicité en translation axiale alternative par le mécanisme intérieur de transmission.

Lors de la rotation de la manivelle, le mécanisme intérieur de transmission transforme le mouvement de rotation de la manivelle autour de son axe transversal en un mouvement de rotation du tambour récupérateur de fil autour de l'axe longitudinal du moulinet, et transforme le mouvement de rotation de la manivelle autour de son axe transversal en un mouvement de translation axiale alternative de l'arbre support de bobine. Il en résulte que le mécanisme intérieur de transmission est relativement complexe, et doit être protégé contre les agents extérieurs agressifs telles que l'humidité, les poussières.

Dans les moulinets habituels, le boîtier est généralement formé de plusieurs parties assemblées les unes aux autres, et le boîtier présente une forme relativement complexe. Il en résulte qu'il est difficile de prévoir des joints d'étanchéité efficaces dans toutes les zones de liaison de pièces formant le boîtier, et dans toutes les zones de passage des éléments mécaniques mobiles tels que l'arbre de manivelle et l'arbre longitudinal creux de tambour récupérateur de fil, les boutons ou leviers de commande de frein de bobine ou de mécanisme anti-retour.

Par exemple, le document US 5 203 104 A enseigne d'utiliser des joints d'étanchéité au passage de l'arbre de manivelle et de l'arbre longitudinal, et entre le boîtier et le couvercle. La solution nécessite une forme de boîtier simple, et n'est pas adaptée à la présence de boutons ou leviers de commande dans les moulinets modernes. Il en est de même pour la solution enseignée par le document FR 2 701 812 A. Ainsi, les moulinets connus ne présentent pas une étanchéité suffisante pour supporter, sans détérioration du mécanisme intérieur de transmission, les agents extérieurs agressifs telles que l'humidité, l'eau, les poussières.

Un objet de la présente invention est de prévoir une nouvelle structure de moulinet comportant des moyens d'étanchéité efficaces, compatible avec le caractère complexe de forme extérieure du moulinet, isolant efficacement les pièces mécaniques mobiles du moulinet par rapport à l'atmosphère extérieure, et sans perturber le fonctionnement normal du moulinet et notamment la rotation ou la translation des éléments mécaniques mobiles.

Un autre objet de l'invention est de prévoir une telle structure d'étanchéité qui soit simple et peu onéreuse, tout en étant robuste et d'un aspect agréable à l'oeil.

Pour atteindre ces objets ainsi que d'autres, un moulinet de pêche selon l'invention comprend une structure de boîtier et de mécanisme connue telle que définie ci-dessus, et comprend en outre :
- une enveloppe à paroi souple étanche, rapportée sur le boîtier pour l'entourer entièrement à l'exception de la base du pied, du trou frontal et des trous latéraux opposés,
- des moyens d'étanchéité supérieurs autour de la base du pied, pour garantir l'étanchéité entre l'atmosphère extérieure et l'espace intérieur à l'enveloppe,
- des premiers moyens d'étanchéité latérale pour obturer de façon étanche l'un des trous latéraux opposés,
- des seconds moyens d'étanchéité latérale pour laisser le passage de l'arbre de manivelle et pour garantir l'étanchéité entre l'atmosphère extérieure et l'espace intérieur à l'enveloppe,
- des moyens d'étanchéité frontale, agencés pour laisser le passage de l'arbre longitudinal creux et pour garantir l'étanchéité autour de l'arbre longitudinal creux entre l'atmosphère extérieure et l'espace intérieur à l'enveloppe.

Outre une étanchéité efficace, l'enveloppe à paroi souple étanche, en matière élastomère, joue un rôle amortisseur anti-choc en cas de chute du moulinet ou de choc contre des rochers par exemple. Elle joue en outre un rôle d'isolant acoustique, réduisant la perception du bruit inévitable de la mécanique interne.

Selon un mode de réalisation, les moyens d'étanchéité frontale comprennent un couvercle rigide comportant un trou central équipé de moyens de joint d'étanchéité annulaire pour recevoir à rotation étanche l'arbre longitudinal creux, le couvercle ayant une zone périphérique d'appui entourant entièrement le trou central et appliquée avec pression par des moyens de fixation et de serrage sur une portion de ladite enveloppe entourant le trou frontal.

Selon un mode de réalisation, les premiers moyens d'étanchéité latérale comprennent un bouchon borgne comportant un bord annulaire d'appui frontal et un filetage intérieur pour se visser sur le filetage extérieur correspondant d'une cheminée axiale en saillie autour de l'un ou l'autre des trous latéraux du boîtier, avec le bord annulaire d'appui frontal venant pincer contre la paroi de boîtier une portion de ladite enveloppe entourant le trou latéral.

Selon un mode de réalisation, les seconds moyens d'étanchéité latérale comprennent un bouchon percé d'un trou axial équipé de moyens de joint d'étanchéité annulaire pour recevoir à rotation étanche l'arbre de manivelle, et comportant un bord annulaire d'appui frontal et un filetage intérieur pour se visser sur le filetage extérieur correspondant d'une cheminée axiale en saillie autour de l'autre des trous latéraux du boîtier, avec le bord annulaire d'appui frontal venant pincer contre la paroi de boîtier une portion correspondante de ladite enveloppe entourant le trou latéral.

Selon un mode de réalisation, les moyens d'étanchéité supérieure comprennent un tenon dépassant sur le boîtier, et un pied rapporté dont la base est évidée pour s'adapter à recouvrement sur le tenon dépassant, avec un bord inférieur périphérique de pied venant pincer contre la paroi du boîtier une portion de ladite enveloppe entourant le tenon dépassant.

Le boîtier peut comporter au moins un bouton basculant d'actionnement du mécanisme intérieur. Le bouton est alors actionnable par déformation de la partie d'enveloppe à paroi souple qui le recouvre.

De préférence, le moulinet comprend en outre un écrou vissé sur une portion axiale filetée d'extrémité de l'arbre longitudinal creux, avec un joint annulaire engagé de façon étanche autour de l'arbre support de bobine et contre l'écrou.

Selon un mode de réalisation avantageux, facilitant l'adaptation de l'enveloppe à paroi souple sur le boîtier de moulinet lors du montage, sans risque de dégradation de l'enveloppe à paroi souple, l'invention prévoit une structure de moulinet dans laquelle :
- l'enveloppe à paroi souple comporte une fente longitudinale dans sa portion supérieure entre une lumière antérieure de passage d'arbre longitudinal creux et une lumière supérieure de passage de pied,
- le pied et/ou le couvercle comporte(nt) une languette venant en appui sur la face externe d'enveloppe autour de la fente longitudinale.

Dans le cas d'un moulinet de pêche à frein de bobine antérieur, il convient de protéger en outre le mécanisme de frein contre les agressions extérieures. Dans ce cas, la bobine comprend un mécanisme de frein antérieur à empilage de rondelles logé dans un évidement axial antérieur du corps de bobine, avec un bouton antérieur rotatif d'actionnement de frein repoussant l'empilage de rondelles dans le fond de l'évidement axial antérieur et engagé par vissage sur l'extrémité de l'arbre support de bobine, avec un joint annulaire d'étanchéité engagé entre la bobine et l'arbre support de bobine en arrière dudit évidement axial antérieur, et avec un disque d'étanchéité engagé sur l'arbre support de bobine en avant de l'évidement axial antérieur et engagé par sa périphérie en appui glissant sur une zone annulaire correspondante de la bobine autour dudit évidement axial antérieur, le disque d'étanchéité étant traversé de façon étanche par des colonnes axiales du bouton d'actionnement de frein qui viennent en appui sur l'empilement de rondelles en arrière du disque d'étanchéité.

D'autres objets, caractéristiques et avantages de la présente invention ressortiront de la description suivante de modes de réalisation particuliers, faite en relation avec les figures jointes, parmi lesquelles:
- la figure 1 est une vue en perspective éclatée montrant les pièces principales à assembler pour réaliser un boîtier de moulinet étanche selon un mode de réalisation de la présente invention ;
- la figure 2 est une vue de côté du moulinet assemblé, sans bobine ;
- la figure 3 est une vue de dessus en coupe longitudinale selon le plan C-C de la figure 2 ;
- la figure 4 est une vue partielle de côté en coupe longitudinale selon le plan longitudinal médian A-A de la figure 3 ;
- la figure 5 est une vue de côté en coupe longitudinale selon le plan longitudinal D-D de la figure 3, légèrement décalé latéralement par rapport au plan longitudinal médian A-A ;
- la figure 6 est une vue de face partielle en coupe transversale selon le plan B-B de la figure 2 ;
- la figure 7 est une coupe transversale partielle selon le plan E de la figure 2, montrant un détail des moyens d'étanchéité dans la zone supérieure du boîtier ;
- la figure 8 est une vue de côté en coupe longitudinale illustrant, à plus grande échelle, une structure de bouton d'actionnement basculant accessible à travers la paroi d'enveloppe souple ;
- la figure 9 est une vue en perspective de dessous, montrant une structure de pied de moulinet selon la présente invention ;
- la figure 10 est une vue de côté en coupe longitudinale d'une structure de bobine à frein avant étanche selon un mode de réalisation de la présente invention ;
- la figure 11 illustre le détail de la zone périphérique d'un disque d'étanchéité selon le mode de réalisation de la figure 10 ;
- la figure 12 illustre le détail de passage d'une colonne de bouton de frein à travers le disque d'étanchéité dans le mode de réalisation de la figure 10 ;
- la figure 13 est une vue d'arrière d'un disque d'étanchéité du mode de réalisation de la figure 10 ;
- la figure 14 est une vue de dessus en coupe transversale du disque d'étanchéité de la figure 13 ;
- la figure 15 est une vue de la face frontale du disque d'étanchéité de la figure 13 ;
- la figure 16 est une vue de côté en coupe diamétrale d'une pièce intermédiaire de liaison selon l'invention entre le bouton d'actionnement de frein et l'empilage de rondelles de frein ;
- la figure 17 est une vue de côté en coupe longitudinale médiane d'un galet de récupérateur de fil muni de moyens d'étanchéité selon un mode de réalisation de la présente invention ;
- les figures 18 et 19 illustrent, en coupe longitudinale, deux variantes de réalisation d'un joint entre l'arbre support de bobine et le tambour de récupérateur ; et
- la figure 20 est une demie vue de côté en coupe des moyens d'étanchéité de galet de récupérateur de fil montrant deux variantes de joints selon l'invention.

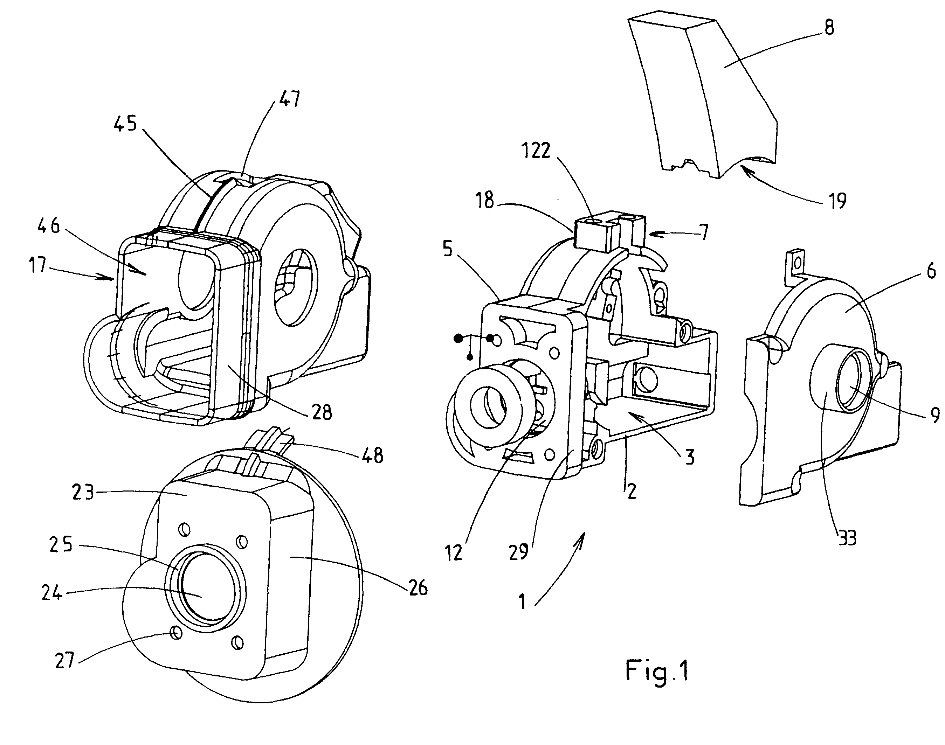

Dans le mode de réalisation illustré sur les figures 1 à 3 et 10, un moulinet de pêche selon la présente invention comprend un boîtier 1 à paroi 2 rigide entourant une cavité 3 dans laquelle est logé un mécanisme intérieur de transmission 4. Comme on le voit sur la figure 1, le boîtier 1 est formé de l'assemblage d'un bâti 5, constituant la partie principale du boîtier 1, et d'un couvercle de bâti 6 rapporté latéralement et fixé sur le bâti 5.

La paroi 2 du boîtier 1 comprend une zone supérieure 7 de liaison à un pied 8 de fixation sur canne à pêche.

La paroi 2 du boîtier 1 comprend deux trous latéraux opposés 9 et 10 pour le passage de l'arbre 11 d'une manivelle de commande du mécanisme intérieur de transmission 4.

La paroi 2 de boîtier 1 comporte un trou frontal 12 de passage d'un arbre longitudinal creux 13 de tambour récupérateur de fil 14.

Le tambour récupérateur de fil 14 est solidaire d'un arbre longitudinal creux 13 engagé à rotation et porté dans le trou frontal 12 du boîtier 1 en étant sollicité en rotation par le mécanisme intérieur de transmission 4. On a ainsi schématiquement représenté une roue dentée 4 portée par l'arbre de manivelle 11 et engrenant avec un pignon d'extrémité postérieure prévu sur l'arbre longitudinal creux 13. L'assemblage du tambour récupérateur de fil 14 sur l'arbre creux 13 est assuré par exemple en engageant en force ou en surmoulant une portion cylindrique 14' du tambour 14 sur l'arbre creux 13.

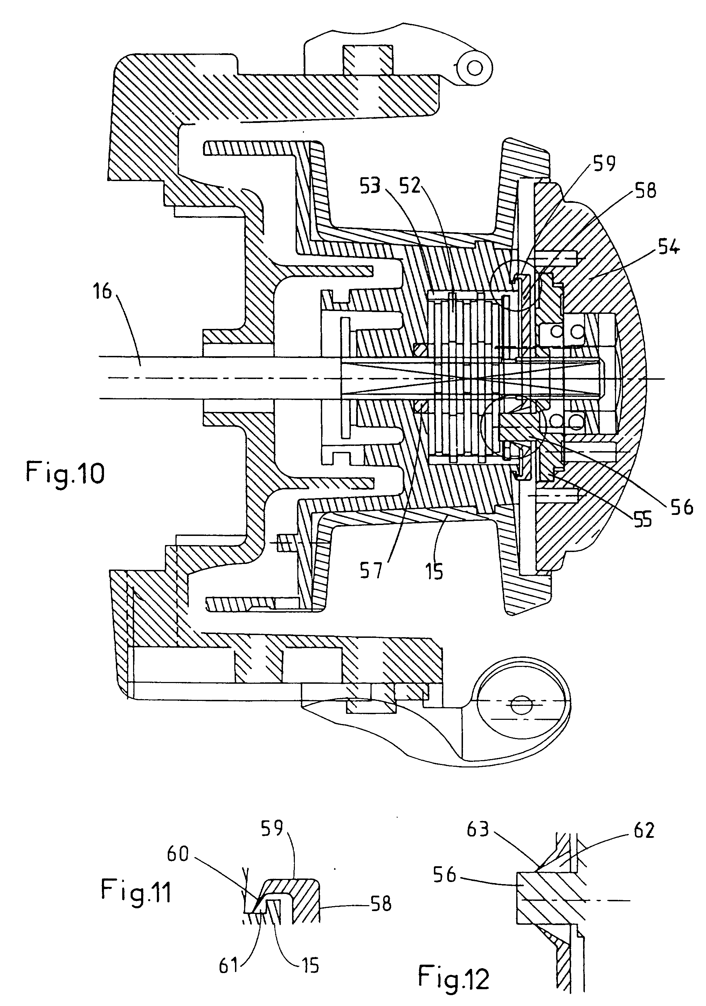

Une bobine réserve de fil 15 peut être adaptée en bout d'un arbre support de bobine 16, comme illustré sur la figure 10, ledit arbre support de bobine 16 traversant l'arbre longitudinal creux 13 en étant sollicité en translation axiale alternative par le mécanisme intérieur de transmission 4, de façon connue en soi et couramment utilisée dans les moulinets de pêche.

Le mécanisme intérieur de transmission 4 peut être l'un parmi les types de mécanisme connus et couramment utilisés dans les moulinets de pêche à bobine fixe et récupérateur de fil.

En se référant à nouveau aux figures 1 à 3, on voit que le moulinet selon l'invention comprend une enveloppe 17 à paroi souple étanche, rapportée sur le boîtier 1 pour l'entourer entièrement à l'exception de la base du pied 8, du trou frontal 12 et des trous latéraux opposés 9 et 10.

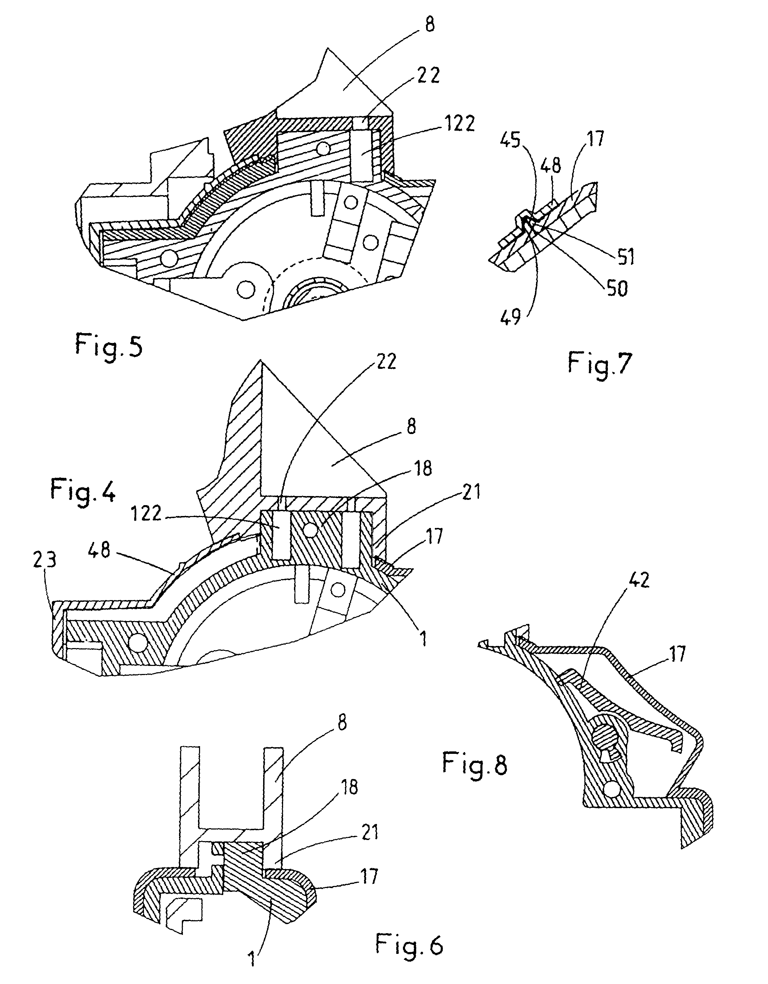

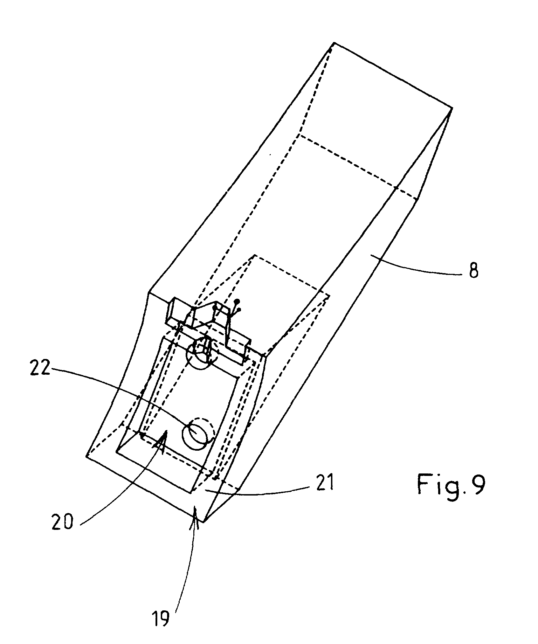

Des moyens d'étanchéité supérieurs sont disposés autour de la base du pied 8, pour garantir l'étanchéité entre l'atmosphère extérieure et l'espace intérieur à l'enveloppe 17, s'opposant notamment à la progression d'humidité ou de poussière depuis l'extérieur vers le boîtier 1. Dans le mode de réalisation illustré sur les figures 1, 3 et 9, les moyens d'étanchéité supérieure comprennent un tenon 18 dépassant sur le boîtier 1, et un pied 8 rapporté dont la base 19 est évidée, comme on le voit mieux sur la figure 9, avec un creux 20 pour s'adapter à recouvrement sur le tenon 18 dépassant, avec un bord inférieur périphérique 21 de pied venant pincer contre la paroi 2 de boîtier 1 une portion de l'enveloppe 17 entourant le tenon 18 dépassant. On voit mieux le pincement de la paroi d'enveloppe autour du tenon 18 notamment sur les figures 4 à 6.

Le pied 8 peut être tenu sur le boîtier 1 par des vis à rondelles métalloplastiques engagées dans des trous 22 du pied 8 (figure 9) et dans des trous 122 correspondants du tenon 18.

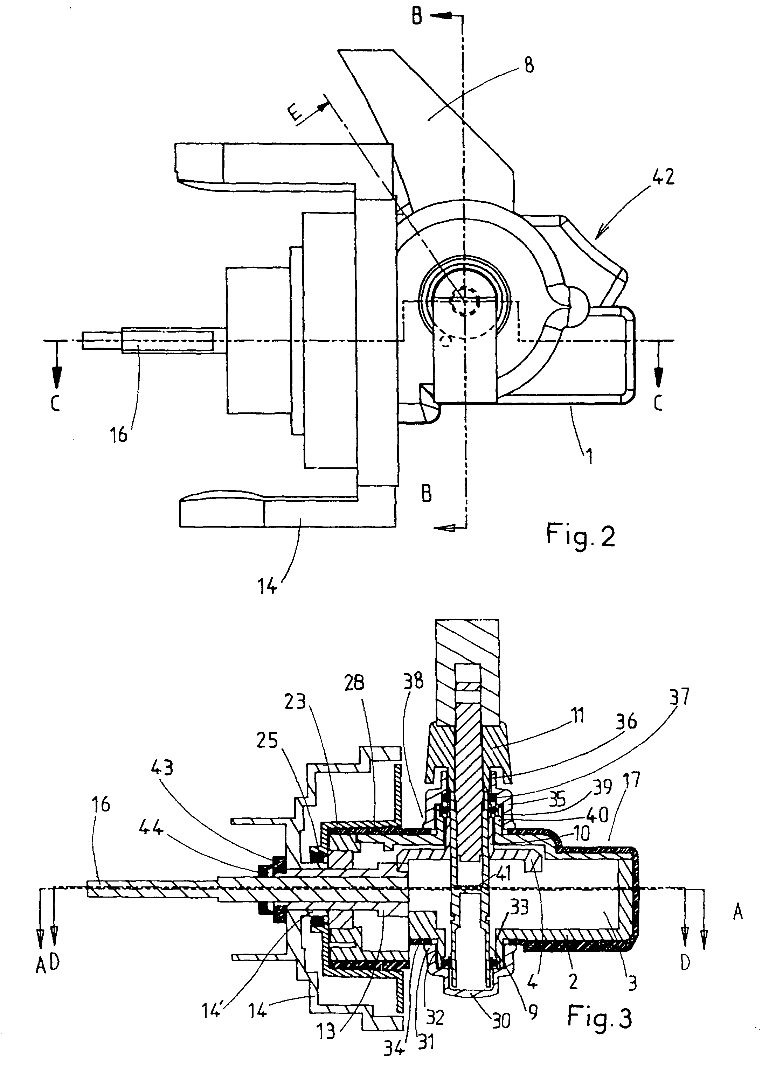

Le moulinet selon l'invention comprend des moyens d'étanchéité frontale, agencés pour laisser le passage de l'arbre longitudinal creux 13 et pour garantir l'étanchéité autour de l'arbre longitudinal creux 13 entre l'atmosphère extérieure et l'espace intérieur à l'enveloppe 17. Dans le mode de réalisation illustré sur les figures, et en particulier sur les figures 1, 3 et 5, les moyens d'étanchéité frontale comprennent un couvercle 23 rigide, comportant un trou central 24 équipé de moyens de joint d'étanchéité annulaire 25 pour recevoir à rotation étanche l'arbre longitudinal creux 13. Comme illustré sur la figure 3, le joint 25 peut avantageusement porter contre la face externe de la portion cylindrique 14' de tambour de récupérateur de fil 14, ladite face externe pouvant être en un matériau approprié pour réduire les frottements et éviter l'usure du joint 25. Le couvercle 23 comprend une zone périphérique d'appui 26 entourant entièrement le trou central 24 et appliquée avec pression, par des moyens de fixation et de serrage tels que des vis engagées dans des trous 27, sur une portion 28 d'enveloppe 17 entourant le trou frontal 24.

Dans le mode de réalisation illustré, le couvercle 23 comporte un rebord périphérique tubulaire à axe antéro-postérieur formant ladite zone périphérique d'appui 26 et venant en regard d'une face latérale périphérique correspondante 28 de l'enveloppe 17, ladite face latérale périphérique correspondante 28 présentant un axe antéro-postérieur. De même, le boîtier 1 présente une surface latérale périphérique 29 conformée de manière similaire, de préférence en tronc de pyramide d'axe antéro-postérieur, de façon que l'engagement axial du couvercle 23 sur la portion 29 du boîtier 1 provoque le coincement progressif de la partie 28 d'enveloppe 17 entre le couvercle 23 et la partie 29 du boîtier 1.

Le moulinet selon l'invention comprend en outre des premiers moyens d'étanchéité latérale pour obturer de façon étanche l'un des trous latéraux opposés 9 et 10 du boîtier 1. Dans le mode de réalisation illustré sur la figure 3, les premiers moyens d'étanchéité latérale comprennent un bouchon borgne 30 comportant un bord annulaire d'appui frontal 31 et un filetage intérieur 32 pour se visser sur le filetage extérieur correspondant d'une cheminée axiale 33 en saillie autour de l'un ou l'autre des trous latéraux opposés 9 et 10 du boîtier 1.

En position assemblée illustrée sur la figure 3, le bord annulaire d'appui frontal 31 du bouchon borgne 30 vient pincer, contre la paroi 2 du boîtier 1, une portion 34 d'enveloppe 17 entourant le trou latéral 9 ou 10.

Le moulinet comprend en outre des seconds moyens d'étanchéité latérale pour laisser le passage de l'arbre 11 de manivelle et pour garantir l'étanchéité entre l'atmosphère extérieure et l'espace intérieur à l'enveloppe 17. Dans le mode de réalisation illustré, comme on le voit mieux sur la figure 3, les seconds moyens d'étanchéité latérale comprennent un bouchon percé 35, muni d'un trou axial 36 équipé de moyens de joint d'étanchéité annulaire 37 pour recevoir à rotation étanche l'arbre 11 de manivelle. Le bouchon percé 35 comporte un bord annulaire d'appui frontal 38 et un filetage intérieur 39 pour se visser sur le filetage extérieur correspondant d'une cheminée axiale 40 en saillie autour de l'autre des trous latéraux opposés 9 et 10 du boîtier 1. En position assemblée, le bord annulaire d'appui frontal 38 vient pincer, contre la paroi 2 du boîtier 1, une portion d'enveloppe 17 entourant le trou latéral 9 ou 10.

De préférence, l'arbre 11 de manivelle est plein, ou comporte une paroi 41 transversale empêchant le passage de fluide le long du canal axial de l'arbre 11 de manivelle.

Dans la réalisation illustrée sur les figures, notamment les figures 2 et 8, le moulinet comporte au moins un bouton d'actionnement 42, par exemple un bouton postérieur basculant d'actionnement du mécanisme intérieur de transmission 4. Le bouton 42 est actionnable par l'utilisateur par déformation de la portion d'enveloppe 17 à paroi souple qui le recouvre.

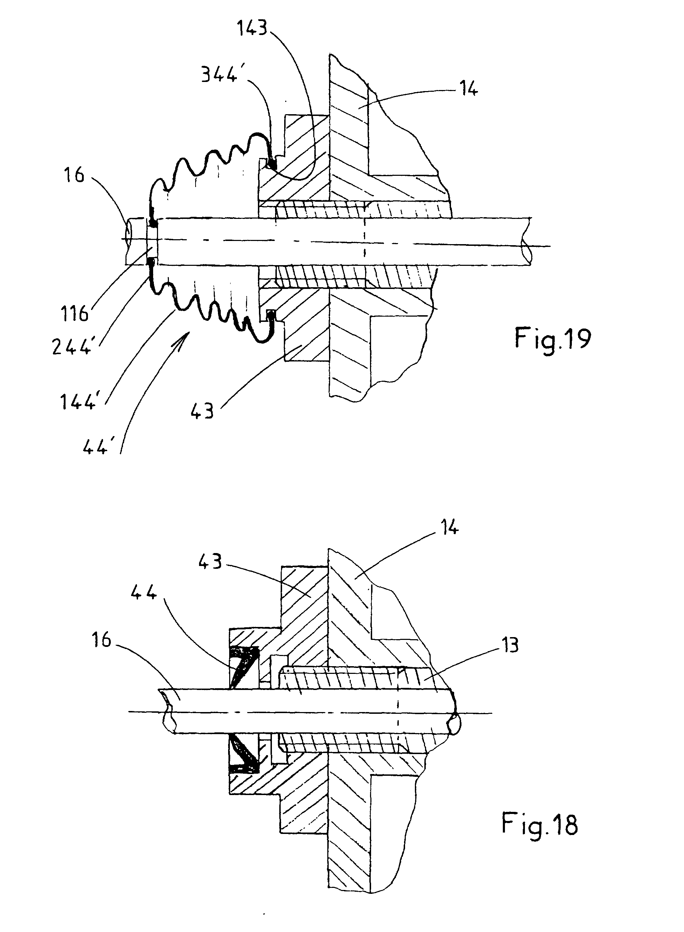

Comme on le voit sur la figure 3 et, plus en détail, sur la figure 18, l'étanchéité entre l'arbre support de bobine 16 et l'arbre longitudinal creux 13 qu'il traverse peut avantageusement être assurée par un écrou 43 équipé d'un joint annulaire intérieur 44 et vissé sur une portion axiale filetée d'extrémité d'arbre longitudinal creux 13, avec le joint annulaire intérieur 44 engagé de façon étanche autour de l'arbre support de bobine 16 et contre l'écrou 43. Le joint annulaire 44 peut avantageusement être un joint à lèvre.

En alternative, comme illustré sur la figure 19, l'étanchéité entre l'arbre support de bobine 16 et l'arbre longitudinal creux 13 peut avantageusement être réalisée par un joint tubulaire 44' à paroi tubulaire latérale 144' ondulée en soufflet limitée par deux lèvres circulaires d'extrémités 244' et 344' engagées à rotation étanche dans des gorges annulaires respectives 116 de l'arbre 16 et 143 de l'écrou 43. On diminue ainsi les frottements dans les mouvements longitudinaux de l'arbre support de bobine 16.

Dans le mode de réalisation illustré sur les figures 1, 4, 5, l'enveloppe 17 à paroi souple comporte une fente longitudinale 45 dans sa portion supérieure entre une lumière antérieure 46 de passage d'arbre longitudinal creux 13 et une lumière supérieure 47 de passage de pied 8. Dans ce cas, le pied 8 et/ou le couvercle 23 comporte(nt) une languette 48 venant en appui sur la face externe d'enveloppe 17 autour de la fente longitudinale 45. Par exemple, comme illustré sur les figures, la languette 48 est avantageusement portée par le couvercle 23.

La languette 48 peut avantageusement comporter une rainure inférieure longitudinale, telle que la rainure 49 illustrée sur la figure 7, dans laquelle viennent s'engager deux rebords saillants 50 et 51 constituant les lèvres de la fente longitudinale 45 d'enveloppe 17. L'étanchéité est ainsi renforcée.

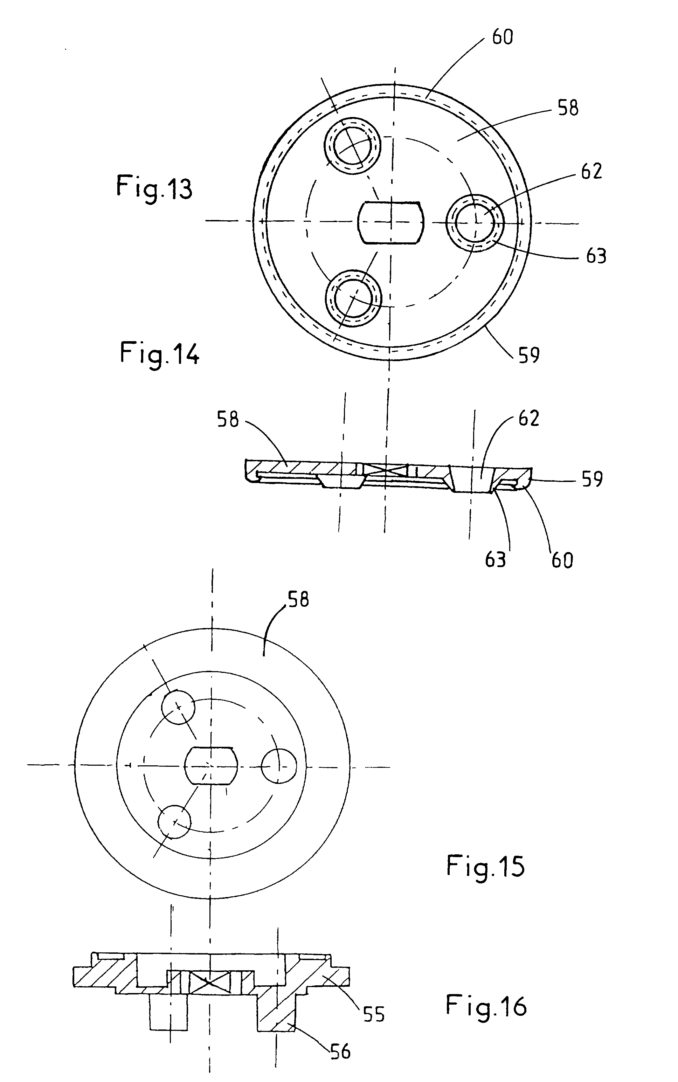

Dans la réalisation illustrée sur les figures 10 à 12, le moulinet comprend une bobine réserve de fil 15 munie d'un mécanisme de frein antérieur à empilage de rondelles 52. L'empilage de rondelles 52 est logé dans un évidement axial antérieur 53 du corps de bobine réserve de fil 15, et un bouton antérieur rotatif 54 permet d'actionner le frein en repoussant l'empilage de rondelles 52 dans le fond de l'évidement axial antérieur 53. Le bouton 54 est engagé par vissage sur l'extrémité antérieure de l'arbre support de bobine 16. Une pièce intermédiaire 55, engagée sur la face postérieure du bouton 54, comporte des colonnes axiales telle que la colonne 56 dont l'extrémité postérieure vient en appui entre l'empilage de rondelles 52. La pièce intermédiaire 55 est représentée isolée sur la figure 16.

Selon le mode de réalisation illustré de l'invention, un joint annulaire d'étanchéité 57 est engagé entre la bobine réserve de fil 15 et l'arbre support de bobine 16 en arrière de l'évidement axial antérieur 53, et un disque d'étanchéité 58 est engagé sur l'arbre support de bobine 16 en avant de l'évidement axial antérieur 53, le disque d'étanchéité 58 étant engagé par sa périphérie 59 en appui glissant sur une zone annulaire correspondante de la bobine réserve de fil 15 autour de l'évidement axial antérieur 53. La figure 11 illustre le détail de l'appui glissant de la périphérie 59 du disque d'étanchéité 58, avec une lèvre 60 repliée en oblique vers l'arrière et vers l'axe et venant en appui dans une gorge 61 du corps de bobine réserve de fil 15. Les figures 13 à 15 illustrent le disque d'étanchéité 58 isolé, selon ses deux faces opposées et en coupe diamétrale.

Le disque d'étanchéité 58 est traversé de façon étanche par les colonnes axiales 56 du bouton 54 d'actionnement de frein pour venir en appui sur l'empilement de rondelles 52 en arrière du disque d'étanchéité 58. Le passage des colonnes axiales 56 à travers le disque d'étanchéité 58 est illustré sur la figure 12, le disque d'étanchéité étant muni d'un trou 62 à lèvre périphérique élastiquement flexible 63 assurant l'étanchéité.

Le dispositif d'étanchéité de frein antérieur de bobine peut être utilisé indépendamment de la présence d'une enveloppe étanche de boîtier.

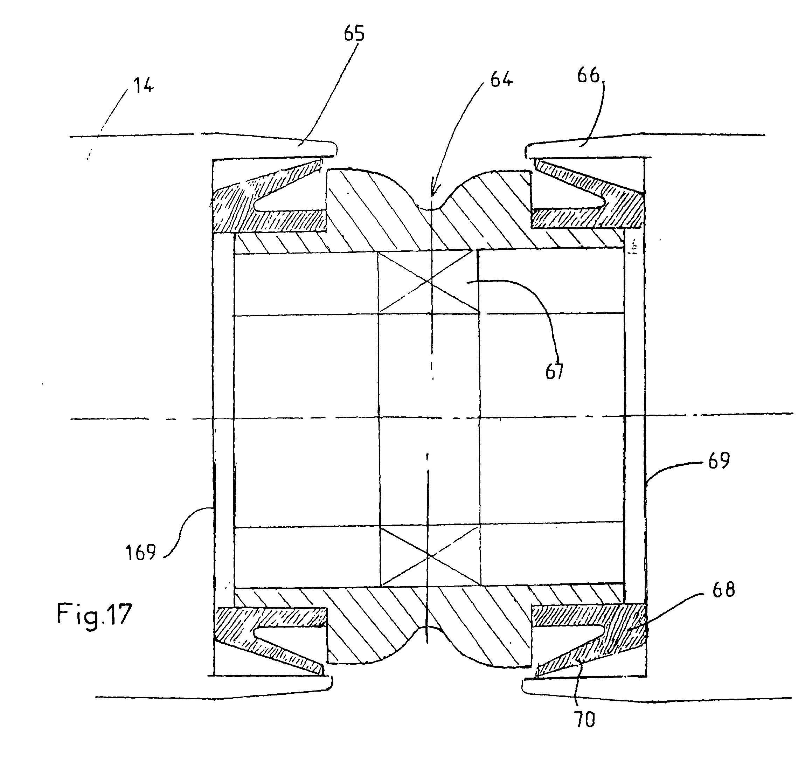

De façon connue en soi, le moulinet selon l'invention peut comporter un galet rotatif, monté sur un bras du récupérateur de fil 14. Selon l'invention, on prévoit de protéger le galet contre les agents extérieurs agressifs susceptibles de provoquer le grippage du galet sur son axe de rotation, interdisant sa rotation ultérieure. La figure 17 illustre un mode de réalisation des moyens de protection selon l'invention : le galet 64 est engagé dans un logement annulaire du bras de récupérateur 14, ledit logement étant pourvu de lèvres partiellement recouvrantes et opposées 65 et 66. Le galet 64 est monté rotatif par un roulement 67, avec un jeu axial entre le galet 64 et les parois frontales 69 et 169 du logement qui le reçoit. Un joint annulaire à lèvre 68 est engagé fixe sur la périphérie du galet 64, et vient porter à la fois contre la paroi frontale 69 correspondante du bras de récupérateur 14 et, par une lèvre élastiquement flexible 70, contre la face intérieure de la lèvre 66 de bras de récupérateur 14. La lèvre élastiquement flexible 70 est en appui glissant sur le bras de récupérateur 14, s'opposant à la pénétration d'agents étrangers à l'intérieur du mécanisme permettant la rotation du galet 64.

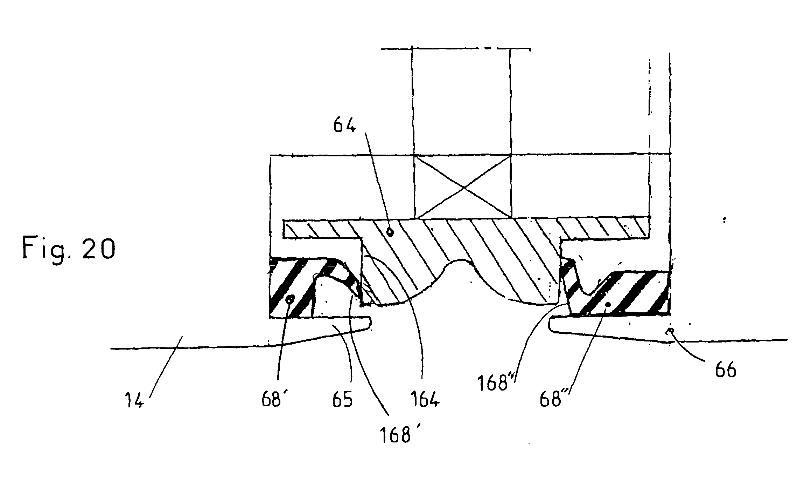

Dans un autre mode de réalisation des moyens de protection du galet 64, tel qu'illustré sur la figure 20, chaque joint annulaire à lèvre 68 est remplacé par un joint annulaire à lèvre 68' monté fixe dans le bras de récupérateur 14 sous une lèvre de bras correspondante 65, avec une lèvre de joint 168' comprimée élastiquement contre une face d'extrémité 164 du galet 64 et orientée en oblique vers l'extérieur.

La figure 20 illustre une variante dans laquelle le joint annulaire à lèvre 68'' est positionné comme le joint 68', sous une lèvre de bras 66, mais avec une lèvre de joint 168'' orientée en oblique vers l'intérieur.

Le dispositif de protection du galet peut être utilisé indépendamment de la présence d'une enveloppe étanche de boîtier ou de moyens d'étanchéité du frein antérieur.

La présente invention n'est pas limitée aux modes de réalisation qui ont été explicitement décrits, mais elle en inclut les diverses variantes et généralisations contenues dans le domaine des revendications ci-après.

## Revendications

1. Moulinet de pêche, comprenant :
- un boîtier (1) à paroi (2) rigide entourant une cavité (3) dans laquelle est logé un mécanisme intérieur de transmission (4), la paroi (2) ayant une zone supérieure (7) de liaison à un pied (8) de fixation sur canne à pêche, avec deux trous latéraux opposés (9, 10) pour le passage de l'arbre (11) d'une manivelle de commande du mécanisme intérieur de transmission (4), avec un trou frontal (12) de passage d'un arbre longitudinal creux (13) de tambour récupérateur de fil (14),
- un tambour récupérateur de fil (14) à arbre longitudinal creux (13) engagé à rotation et porté dans le trou frontal (12) du boîtier (1) en étant sollicité en rotation par le mécanisme intérieur de transmission (4),
- une bobine (15) portée en bout d'un arbre support de bobine (16), l'arbre support de bobine (16) traversant l'arbre longitudinal creux (13) et étant sollicité en translation axiale alternative par le mécanisme intérieur de transmission (4),
caractérisé en ce qu'il comprend :
- une enveloppe (17) à paroi souple étanche, rapportée sur le boîtier (1) pour l'entourer entièrement à l'exception de la base du pied (8), du trou frontal (12) et des trous latéraux opposés (9, 10),
- des moyens d'étanchéité supérieurs autour de la base du pied (8), pour garantir l'étanchéité entre l'atmosphère extérieure et l'espace intérieur à l'enveloppe (17),
- des premiers moyens d'étanchéité latérale pour obturer de façon étanche l'un des trous latéraux (9) opposés,
- des seconds moyens d'étanchéité latérale pour laisser le passage de l'arbre (11) de manivelle et pour garantir l'étanchéité entre l'atmosphère extérieure et l'espace intérieur à l'enveloppe (17),
- des moyens d'étanchéité frontale (23), agencés pour laisser le passage de l'arbre longitudinal creux (13) et pour garantir l'étanchéité autour de l'arbre longitudinal creux (13) entre l'atmosphère extérieure et l'espace intérieur à l'enveloppe (17).

2. Moulinet de pêche selon la revendication 1, caractérisé en ce que les moyens d'étanchéité frontale comprennent un couvercle (23) rigide comportant un trou central (24) équipé de moyens de joint d'étanchéité annulaire (25) pour recevoir à rotation étanche l'arbre longitudinal creux (13), le couvercle (23) ayant une zone périphérique d'appui (26) entourant entièrement le trou central (24) et appliquée avec pression par des moyens de fixation et de serrage sur une portion (28) de ladite enveloppe (17) entourant le trou frontal (24).

3. Moulinet de pêche selon la revendication 2, caractérisé en ce que le couvercle (23) comporte un rebord périphérique tubulaire (26) à axe antéro-postérieur formant ladite zone périphérique d'appui (26) et venant en regard d'une face latérale périphérique correspondante (28) de l'enveloppe (17) à axe antéro-postérieur, le boîtier (1) ayant une surface latérale périphérique (29) similaire.

4. Moulinet de pêche selon l'une quelconque des revendications 1 à 3, caractérisé en ce que les premiers moyens d'étanchéité latérale comprennent un bouchon borgne (30) comportant un bord annulaire d'appui frontal (31) et un filetage intérieur (32) pour se visser sur le filetage extérieur correspondant d'une cheminée axiale (33) en saillie autour de l'un ou l'autre des trous latéraux (9, 10) du boîtier (1), avec le bord annulaire d'appui frontal (31) venant pincer contre la paroi (2) de boîtier (1) une portion (34) de ladite enveloppe (17) entourant le trou latéral (9, 10).

5. Moulinet de pêche selon l'une quelconque des revendications 1 à 4, caractérisé en ce que les seconds moyens d'étanchéité latérale comprennent un bouchon percé (35) d'un trou axial (36) équipé de moyens de joint d'étanchéité annulaire (37) pour recevoir à rotation étanche l'arbre (11) de manivelle, et comportant un bord annulaire d'appui frontal (38) et un filetage intérieur (39) pour se visser sur le filetage extérieur correspondant d'une cheminée axiale (40) en saillie autour de l'autre des trous latéraux (9, 10) du boîtier (1), avec le bord annulaire d'appui frontal (38) venant pincer contre la paroi (2) de boîtier (1) une portion correspondante de ladite enveloppe (17) entourant le trou latéral (9, 10).

6. Moulinet de pêche selon l'une quelconque des revendications 1 à 5, caractérisé en ce que les moyens d'étanchéité supérieure comprennent un tenon (18) dépassant sur le boîtier (1), et un pied (8) rapporté dont la base (19) est évidée pour s'adapter à recouvrement sur le tenon dépassant (18), avec un bord inférieur périphérique (21) de pied venant pincer contre la paroi (2) du boîtier (1) une portion de ladite enveloppe (17) entourant le tenon dépassant (18).

7. Moulinet de pêche selon l'une quelconque des revendications 1 à 6, caractérisé en ce que le boîtier (1) comporte un bouton (42) basculant d'actionnement du mécanisme intérieur (4), actionnable par déformation de la portion d'enveloppe à paroi souple (17) qui le recouvre.

8. Moulinet de pêche selon l'une quelconque des revendications 1 à 7, caractérisé en ce qu'il comprend un écrou (43) vissé sur une portion axiale filetée d'extrémité de l'arbre longitudinal creux (13), avec un joint annulaire (44, 44') engagé de façon étanche autour de l'arbre support de bobine (16) et contre l'écrou (43).

9. Moulinet de pêche selon l'une quelconque des revendications 1 à 8, caractérisé en ce que :
- l'enveloppe (17) à paroi souple comporte une fente longitudinale (45) dans sa portion supérieure entre une lumière antérieure (46) de passage d'arbre longitudinal creux (13) et une lumière supérieure (47) de passage de pied (8),
- le pied (8) et/ou le couvercle (23) comporte(nt) une languette (48) venant en appui sur la face externe d'enveloppe (17) autour de la fente longitudinale (45).

10. Moulinet de pêche selon l'une quelconque des revendications 1 à 9, caractérisé en ce que la bobine (15) comprend un mécanisme de frein antérieur à empilage de rondelles (52) logé dans un évidement axial antérieur (53) du corps de bobine (15), avec un bouton antérieur rotatif (54) d'actionnement de frein repoussant l'empilage de rondelles (52) dans le fond de l'évidement axial antérieur (53) et engagé par vissage sur l'extrémité antérieure de l'arbre support de bobine (16), avec un joint annulaire d'étanchéité (57) engagé entre la bobine (15) et l'arbre support de bobine (16) en arrière dudit évidement axial antérieur (53), et avec un disque d'étanchéité (58) engagé sur l'arbre support de bobine (16) en avant de l'évidement axial antérieur (53) et engagé par sa périphérie (59) en appui glissant sur une zone annulaire correspondante (61) de la bobine (15) autour dudit évidement axial antérieur (53), le disque d'étanchéité (58) étant traversé de façon étanche par des colonnes axiales (56) du bouton (54) d'actionnement de frein qui viennent en appui sur l'empilement de rondelles (52) en arrière du disque d'étanchéité (58).

## Claims

1. A fishing reel including:
- a casing (1) with a rigid wall (2) surrounding a cavity (3) in which is accommodated an interior transmission mechanism (4), the wall (2) having an upper area (7) connected to a support (8) adapted to be fixed to a fishing rod, with two opposed lateral holes (9, 10) for the passage of the shaft (11) of a crank handle for operating the interior transmission mechanism (4), with a front hole (12) of passage for a hollow longitudinal shaft (13) of a line recovery drum (14),
- a line recovery drum (14) with a hollow longitudinal shaft (13) rotatably engaged in and supported by the front hole (12) of the casing (1) and driven in rotation by the interior transmission mechanism (4),
- a spool (15) carried at the end of a spool support shaft (16), the spool support shaft (16) passing through the hollow longitudinal shaft (13) and being reciprocated in axial translation by the interior transmission mechanism (4),
characterized in that it includes:
- an envelope (17) with a flexible watertight wall, attached to the casing (1) and surrounding it entirely except for the base of the support (8), the front hole (12) and the opposed lateral holes (9, 10),
- top sealing means around the base of the support (8), to guarantee the seal between the exterior atmosphere and the interior space of the envelope (17),
- first lateral sealing means to close off one of the opposed lateral holes (9) in a watertight manner,
- second lateral sealing means for the shaft (11) of the crank handle to pass through and to guarantee the seal between the exterior atmosphere and the interior space of the envelope (17),
- front sealing means (23) for the hollow longitudinal shaft (13) to pass through and adapted to guarantee the seal around the hollow longitudinal shaft (13) between the exterior atmosphere and the interior space of the envelope (17).

2. A fishing reel according to claim 1, characterized in that the front sealing means include a rigid cover (23) incorporating a central hole (24) provided with annular sealing means (25) to receive the hollow longitudinal shaft (13) rotatably and in a watertight manner, the cover (23) having a peripheral bearing area (26) entirely surrounding the central hole (24) and pressed by fixing and clamping means onto a portion (28) of said envelope (17) surrounding the front hole (24).

3. A fishing reel according to claim 2, characterized in that the cover (23) includes a tubular peripheral rim (26) with an anterior-posterior axis forming said peripheral bearing area (26) and facing a corresponding peripheral lateral face (28) of the envelope (17) with an anterior-posterior axis, the casing (1) having a similar peripheral lateral surface (29).

4. A fishing reel according to any of claims 1 to 3, characterized in that the first lateral sealing means include a blind plug (30) which has a front annular bearing rim (31) and an interior thread (32) so that it can be screwed onto the corresponding exterior thread of an axial bush (33) projecting around one or the other of the lateral holes (9, 10) of the casing (1), with the front bearing annular rim (31) clamping against the wall (2) of the casing (1) a portion (34) of said envelope (17) surrounding the lateral hole (9, 10).

5. A fishing reel according to any of claims 1 to 4, characterized in that the second lateral sealing means include a plug (35) pierced by an axial hole (36) equipped with annular sealing means (37) to receive the crank handle shaft (11) rotatably and in a watertight manner, and having a front annular bearing rim (38) and an interior thread (39) adapted to be screwed onto the corresponding exterior thread of an axial bush (40) projecting around the other of the lateral holes (9, 10) of the casing (1), with the front annular bearing rim (38) clamping against the wall (2) of the casing (1) a corresponding portion of said envelope (17) surrounding the lateral hole (9, 10).

6. A fishing reel according to any of claims 1 to 5, characterized in that the top sealing means include a tenon (18) projecting from the casing (1), and an attached support (8) whose base (19) is recessed to fit over the projecting tenon (18), with a peripheral lower support rim (21) clamping a portion of said envelope (17) surrounding the projecting tenon (18) against the wall (2) of the casing (1).

7. A fishing reel according to any of claims 1 to 6, characterized in that the casing (1) includes a rocker button (42) for activating the interior mechanism (4) adapted to be actuated by deformation of the flexible wall envelope portion (17) covering it.

8. A fishing reel according to any of claims 1 to 7, characterized in that it includes a nut (43) screwed onto an axial threaded end portion of the hollow longitudinal shaft (13) with an annular seal (44, 44') fitted around the spool support shaft (16) in a watertight manner and against the nut (43).

9. A fishing reel according to any of claims 1 to 8, characterized in that:
- the flexible wall envelope (17) incorporates a longitudinal slot (45) in its upper portion between an anterior opening (46) through which the hollow longitudinal shaft (13) passes and a top opening (47) through which the support (8) passes,
- the support (8) and/or the cover (23) include(s) a tongue (48) bearing on the external envelope face (17) around the longitudinal slot (45).

10. A fishing reel according to any of claims 1 to 9, characterized in that the spool (15) includes an anterior brake mechanism with a stack of washers (52) accommodated in an anterior axial opening (53) of the spool body (15), with a rotary anterior button (54) for actuating the brake pushing the stack of washers (52) into the bottom of the anterior axial opening (53) and screwed onto the anterior end of the spool support shaft (16), with an annular seal (57) engaged between the spool (15) and the spool support shaft (16) to the rear of said anterior axial opening (53), and with a sealing disk (58) fitted over the spool support shaft (16) in front of the anterior axial opening (53) and with its periphery (59) in sliding bearing engagement with a corresponding annular area (61) of the spool (15) around said anterior axial opening (53), axial columns (56) of the button (54) for actuating the brake passing through the sealing disk (58) in a watertight manner and bearing on the stack of washers (52) to the rear of the sealing disk (58).

## Patentansprüche

1. Angelrolle mit:
- einem Gehäuse (1), das eine feste Wand (2) aufweist, die einen Hohlraum (3) umgibt, in welchem ein innerer Antriebsmechanismus (4) angeordnet ist, wobei die Wand (2) einen oberen Bereich (7) für die Verbindung mit einem Befestigungsfuß (8) an der Angelrute aufweist, mit zwei einander gegenüberliegenden seitlichen Löchern (9, 10) für den Durchtritt der Kurbelachse (11) einer Steuerwelle des inneren Antriebsmechanismus (4), mit einem vorderen Loch (12) für den Durchtritt einer längs verlaufenden Hohlwelle (13) der Wickeltrommel (14) für die Angelschnur,
- eine Wickeltrommel (14) für die Angelschnur auf der längs verlaufenden Hohlwelle (13), die zur Drehung in das vordere Loch (12) des Gehäuses (1) eingesteckt und gelagert ist, wodurch sie durch den inneren Antriebsmechanismus (4) für eine Drehbewegung beansprucht wird,
- eine Spule (15), die am Ende einer Stützwelle (16) für die Spule gehalten ist, wobei die Stützwelle (16) für die Spule die längs verlaufende Hohlwelle (13) durchquert und von dem inneren Antriebsmechanismus (4) für eine hin- und hergehende axiale Verschiebung beaufschlagt ist,
dadurch gekennzeichnet,
daß sie folgendes enthält:
- eine Umhüllung (17) aus einer flexiblen, dichten Wand, die auf das Gehäuse (1) aufgesetzt ist und es vollständig umhüllt mit Ausnahme der Basis des Fußes (8), des vorderen Loches (12) und der gegenüberliegenden seitlichen Löcher (9, 10),
- obere Dichtungsmittel um die Basis des Fußes (8) herum, um die Dichtigkeit zwischen der äußeren Atmosphäre und dem Innenraum der Umhüllung (17) zu garantieren,
- erste seitliche Dichtungsmittel, um eines der gegenüberliegenden seitlichen Löcher (9) dicht zu verschließen,
- zweite seitliche Dichtungsmittel, um den Durchtritt der Kurbelachse (11) der Steuerwelle zu gestatten und die Dichtigkeit zwischen der äußeren Atmosphäre und dem Innenraum der Umhüllung (17) zu garantieren,
- vordere Dichtungsmittel (23), die so angeordnet sind, daß sie den Durchtritt der längs verlaufenden Hohlwelle (13) gestatten und die Dichtigkeit um die längs verlaufende Hohlwelle (13) herum zwischen der äußeren Atmosphäre und dem Innenraum der Umhüllung (17) zu garantieren.

2. Angelrolle nach Anspruch 1, dadurch gekennzeichnet, daß die vorderen Dichtungsmittel einen festen Deckel (23) aufweisen, der ein mittiges Loch (24) enthält, das mit ringförmigen dichtenden Verbindungsmitteln (25) ausgestattet ist, um die längs verlaufende Hohlwelle (13) für eine dichte Drehung aufzunehmen, wobei der Deckel (23) eine umlaufende Anlagezone (26) aufweist, die das mittige Loch (24) vollständig umgibt und mit Druck durch Befestigungs- und Spannmittel gegen einen Teil (28) der genannten Umhüllung (17), die das vordere Loch (24) umgibt, angelegt ist.

3. Angelrolle nach Anspruch 2, dadurch gekennzeichnet, daß der Deckel (23) einen rohrförmigen umlaufenden Rand (26) längs einer von vorne nach hinten laufenden Achse aufweist, die die genannte umlaufende Anlagezone (26) bildet und bezüglich einer entsprechenden umlaufenden Seitenfläche (28) der Umhüllung (17) auf einer von vorne nach hinten laufenden Achse liegt, wobei das Gehäuse (1) eine ähnliche seitliche umlaufende Fläche (29) aufweist.

4. Angelrolle nach einem der Ansprüche 1 bis 3, dadurch gekennzeichnet, daß die ersten seitlichen Dichtungsmittel aus einer Abschlußkappe (30) bestehen, die einen ringförmigen vorderen Anlagerand (31) und ein Innengewinde (32) aufweist, zum Aufschrauben auf ein entsprechendes Außengewinde an einem axialen Kamin (33), der rings um das eine oder das andere seitliche Loch (9, 10) des Gehäuses (1) auskragt, wobei der ringförmige vordere Anlagerand (31) gegen die Wand (2) des Gehäuses (1) einen Abschnitt (34) der Umhüllung (17), die das seitliche Loch (9, 10) umgibt, drückt.

5. Angelrolle nach einem der Ansprüche 1 bis 4, dadurch gekennzeichnet, daß die zweiten seitlichen Dichtungsmittel einen Stopfen (35) aufweisen, der mit einem axialen Loch (36) durchstoßen ist, und mit ringförmigen dichtenden Verbindungsmitteln (37) ausgestattet ist, um die Steuerwelle (11) für eine dichte Drehung aufzunehmen und der einen vorderen ringförmigen Anlagerand (38) und ein Innengewinde (39) aufweist, zum Aufschrauben auf ein entsprechendes Außengewinde an einem axialen Kamin (40) der um das andere seitliche Loch (9, 10) des Gehäuses (1) auskragt, wobei der ringförmige vordere Anlagerand (38) gegen die Wand (2) des Gehäuses (1) an einem entsprechenden Abschnitt des Gehäuses (17), der das seitliche Loch (9, 10) umgibt, drückt.

6. Angelrolle nach einem der Ansprüche 1 bis 5, dadurch gekennzeichnet, daß die oberen Dichtungsmittel einen Zapfen (18) aufweisen, der über das Gehäuse (1) hervorsteht und einen aufgesetzten Fuß (8), dessen Basis (19) hohl ist, um sich an die Abdeckung auf dem vorstehenden Zapfen (18) anzupassen, mit einem inneren umlaufenden Rand (21) des Fußes, der gegen die Wand (2) des Gehäuses (1) einen Abschnitt der Umhüllung (17), die den vorstehenden Zapfen (18) umgibt, drückt.

7. Angelrolle nach einem der Ansprüche 1 bis 6, dadurch gekennzeichnet, daß das Gehäuse (1) einen ausklappbaren Knopf (42) aufweist, der die Betätigung des inneren Mechanismus (4) auflöst und durch Deformation des Teiles der Umhüllung mit flexibler Wand (17), der ihn umgibt, betätigbar ist.

8. Angelrolle nach einem der Ansprüche 1 bis 7, dadurch gekennzeichnet, daß sie eine Schraubmutter (43) enthält, die auf einen axialen Teil der längs verlaufenden Hohlwelle (13) mit Außengewinde aufgeschraubt ist, mit einer ringförmigen Verbindung (44, 44'), die dichtend um die Stützwelle der Spule (16) und gegen die Schraubmutter (43) eingreift.

9. Angelrolle nach einem der Ansprüche 1 bis 8, dadurch gekennzeichnet, daß
- die Umhüllung (17) mit der flexiblen Wand einen Längsschlitz (45) in seinem oberen Teil zwischen einer hinteren Durchgangsöffnung (46) der längs verlaufenden Hohlwelle (13) und einer oberen Durchgangsöffnung (47) des Fußes (8) aufweist,
- der Fuß (8) und/oder der Deckel (23) eine Lasche (48) aufweisen, die auf der Außenfläche der Umhüllung (17) rings um den Längsschlitz (45) zur Anlage kommt.

10. Angelrolle nach einem der Ansprüche 1 bis 9, dadurch gekennzeichnet, daß die Spule (15) einen vorderen Bremsmechanismus in Form eines Stapels von Scheiben (52) aufweist, die in einer axialen vorderen Ausnehmung (53) des Spulenkörpers (15) angeordnet sind, wobei ein drehbarer vorderer Betätigungsknopf (54) der Bremse den Stapel von Scheiben (52) in den Grund der axialen vorderen Ausnehmung (53) drückt und mittels einer Verschraubung auf der vorderen Extremität der Stützwelle der Spule (16) befestigt ist, mit einer ringförmigen abdichtenden Verbindung (57), die zwischen der Spule (15) und der Stützwelle der Spule (16) eingreift und zwar an der Rückseite der genannten axialen vorderen Ausnehmung (53), und mit einer Dichtungsscheibe (58), die mit der Stützwelle der Spule (16) in Eingriff steht und zwar vor der axialen vorderen Ausnehmung (53) und mit seiner Peripherie (59) in Eingriff steht, so daß er gleitend auf die entsprechende ringförmige Zone (61) der Spule (15) rings um die genannte axiale vordere Ausnehmung (53) drückt, wobei die Dichtungsscheibe (58) in dichtender Weise von axialen Säulen (56) des Betätigungsknopfes (54) der Bremse durchdrungen ist, welche auf der Rückseite der Dichtungsscheibe (58) an den Stapel von Scheiben (52) zur Anlage kommen.
